# EUROPEAN PATENT SPECIFICATION

(11) **EP 2 956 626 B1**
(45) Date of publication and mention of the grant of the patent: **20.11.2019**
(21) Application number: 14751171.1
(22) Date of filing: 28.01.2014
(51) Int. Cl.: F01D 5/14, F01D 5/18, F02C 7/00

(54) **FAN BLADE INCLUDING EXTERNAL CAVITIES**
FANSCHAUFEL MIT EXTERNEN HOHLRÄUMEN
AUBE DE SOUFFLANTE COMPRENANT DES CAVITÉS EXTÉRIEURES

(30) Priority: 12.02.2013 US 201361763681 P
(43) Date of publication of application: 23.12.2015
(73) Proprietor: United Technologies Corporation, Farmington, CT 06032 (US)
(72) Inventor: COSBY, James, Glastonbury, Connecticut 06033 (US); HUI, Kwan, Tucker, GA 30084 (US); WEISSE, Michael A., Tolland, Connecticut 06084 (US)
(74) Representative: Dehns
(86) International application number: PCT/US2014/013341
(87) International publication number: WO 2014/126704

(56) References cited:
- EP-A1- 1 041 246
- EP-A1- 1 464 792
- EP-A1- 2 320 030
- EP-A1- 2 366 871
- EP-A2- 1 878 872
- JP-A- H08 121 106
- US-A- 3 333 818
- US-A- 5 407 326
- US-A- 5 443 365
- US-A- 5 443 367
- US-A- 6 033 186
- US-A1- 2006 228 216
- US-B1- 6 431 837
- US-B2- 7 033 131

## Description

### BACKGROUND OF THE INVENTION

Fan blades of a gas turbine engine are thin and have an aerodynamic shape to reduce weight and minimize thrust specific fuel consumption. However, the fan blades must also meet structural requirements to withstand an event, such as a bird strike.

Internal cavities can be employed to reduce the weight of the fan blade, while still meeting structural requirements. As the cavities are internal, air does not flow through the cavities and affect performance.

EP 1878872 A2 discloses a prior art blade as set forth in the preamble of claim 1.

US 6033186 A discloses a prior art fan blade.

US 6431837 B1 discloses a prior art fan blade.

US 5443365 A discloses a prior art fan blade.

US 3333818 A discloses a prior art turbine rotor.

EP 1464792 A2 discloses a prior art turbine rotor section.

EP 2 320 030 A1 and EP 1 041 246 A1 disclose blades having elliptical openings in the root portion.

### SUMMARY OF THE INVENTION

According to the invention, there is provided a blade of a gas turbine engine according to claim 1.

In an embodiment of the foregoing blade, the blade is a fan blade of a fan.

In a further embodiment of any of the foregoing blades the blade, has a pressure side and a suction side spaced apart by a thickness, and each of the plurality of external cavities extend from the pressure side to the suction side.

In a further embodiment of any of the foregoing blades the blade, has a pressure side and a suction side spaced apart by a thickness, and each of the plurality of external cavities extend partially through the thickness of the blade.

In a further embodiment of any of the foregoing blades, each of the plurality of external cavities extend in a radial direction.

A further embodiment of any of the foregoing blades includes a plurality of internal cavities in the first portion of the blade, and a cover is secured over the plurality of internal cavities.

There is further provided a fan of a gas turbine engine according to claim 8. In an embodiment of the foregoing fan, the root portion is a dovetail.

These and other features of the present invention can be best understood from the following specification and drawings, the following of which is a brief description.

### BRIEF DESCRIPTION OF THE DRAWINGS

Figure 1 illustrates a schematic view of an embodiment of a gas turbine engine;
Figure 2A illustrates a perspective view of a pressure side of a fan blade according to a first embodiment;
Figure 2B illustrates a perspective view of a suction side of the fan blade according to the first embodiment;
Figure 3 illustrates a side view of a fan blade including an external cavity that is a recess or a pocket;
Figure 4A illustrates a perspective view of a pressure side of a fan blade according to a second embodiment;
Figure 4B illustrates a perspective view of a suction side of the fan blade according to the second embodiment;
Figure 5A illustrates a perspective view of a pressure side of a third fan blade falling outside the scope of the present invention; and
Figure 5B illustrates a perspective view of a suction side of the third example fan blade.

### DETAILED DESCRIPTION OF THE PREFERRED EMBODIMENT

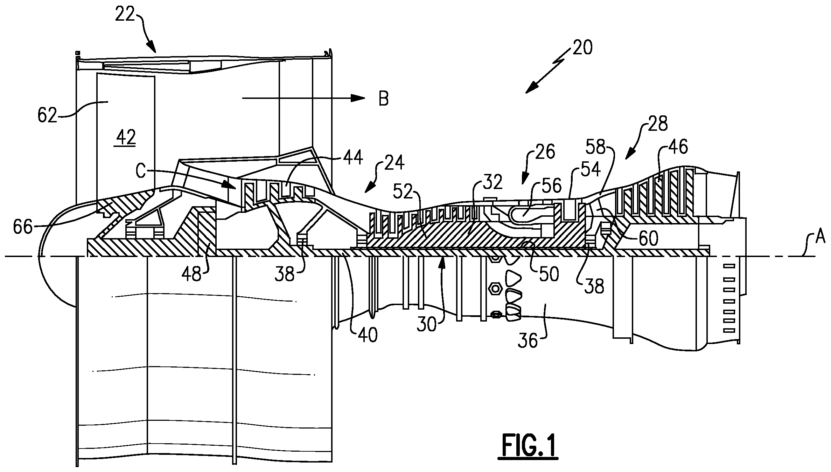

Figure 1 schematically illustrates an example gas turbine engine 20, such as a geared turbofan engine, that includes a fan section 22, a compressor section 24, a combustor section 26 and a turbine section 28. Alternative engines might include an augmenter section (not shown) among other systems or features. The fan section 22 includes a fan 42 and drives air along a bypass flow path B while the compressor section 24 draws air in along a core flow path C where air is compressed and communicated to the combustor section 26. In the combustor section 26, air is mixed with fuel and ignited to generate a high pressure exhaust gas stream that expands through the turbine section 28 where energy is extracted and utilized to drive the fan section 22 and the compressor section 24.

Although the disclosed non-limiting embodiment depicts a geared turbofan gas turbine engine, it should be understood that the concepts described herein are not limited to use with geared turbofans as the teachings may be applied to other types of traditional turbine engines. For example, the gas turbine engine 20 can have a three-spool architecture in which three spools concentrically rotate about a common axis and where a low spool enables a low pressure turbine to drive the fan via a gearbox, an intermediate spool that enables an intermediate pressure turbine to drive a first compressor of the compressor section, and a high spool that enables a high pressure turbine to drive a high pressure compressor of the compressor section.

The example gas turbine engine 20 generally includes a low speed spool 30 and a high speed spool 32 mounted for rotation about a central longitudinal axis A relative to an engine static structure 36 via several bearing systems 38. It should be understood that various bearing systems 38 at various locations may alternatively or additionally be provided.

The low speed spool 30 generally includes an inner shaft 40 that connects the fan 42 and a low pressure (or first) compressor 44 to a low pressure (or first) turbine 46. The inner shaft 40 drives the fan 42 through a speed change device, such as a geared architecture 48, to drive the fan 42 at a lower speed than the low speed spool 30. The highspeed spool 32 includes an outer shaft 50 that interconnects a high pressure (or second) compressor 52 and a high pressure (or second) turbine 54. The inner shaft 40 and the outer shaft 50 are concentric and rotate via the bearing systems 38 about the central longitudinal axis A.

A combustor 56 is arranged between the high pressure compressor 52 and the high pressure turbine 54. In one example, the high pressure turbine 54 includes at least two stages to provide a double stage high pressure turbine 54. In another example, the high pressure turbine 54 includes only a single stage. As used herein, a "high pressure" compressor or turbine experiences a higher pressure than a corresponding "low pressure" compressor or turbine.

The example low pressure turbine 46 has a pressure ratio that is greater than about 5. The pressure ratio of the example low pressure turbine 46 is measured prior to an inlet of the low pressure turbine 46 as related to the pressure measured at the outlet of the low pressure turbine 46 prior to an exhaust nozzle.

A mid-turbine frame 58 of the engine static structure 36 is arranged generally between the high pressure turbine 54 and the low pressure turbine 46. The mid-turbine frame 58 further supports bearing systems 38 in the turbine section 28 as well as setting airflow entering the low pressure turbine 46.

The air in the core flow path C is compressed by the low pressure compressor 44 then by the high pressure compressor 52 mixed with fuel and ignited in the combustor 56 to produce high speed exhaust gases that are then expanded through the high pressure turbine 54 and low pressure turbine 46. The mid-turbine frame 58 includes vanes 60, which are in the core flow path C and function as an inlet guide vane for the low pressure turbine 46. Utilizing the vane 60 of the mid-turbine frame 58 as the inlet guide vane for low pressure turbine 46 decreases the length of the low pressure turbine 46 without increasing the axial length of the mid-turbine frame 58. Reducing or eliminating the number of vanes in the low pressure turbine 46 shortens the axial length of the turbine section 28. Thus, the compactness of the gas turbine engine 20 is increased and a higher power density may be achieved.

The disclosed gas turbine engine 20 in one example is a high-bypass geared aircraft engine. In a further example, the gas turbine engine 20 includes a bypass ratio greater than about six, with an example embodiment being greater than about ten. The example geared architecture 48 is an epicyclical gear train, such as a planetary gear system, star gear system or other known gear system, with a gear reduction ratio of greater than about 2.3.

In one disclosed embodiment, the gas turbine engine 20 includes a bypass ratio greater than about ten and the fan diameter is significantly larger than an outer diameter of the low pressure compressor 44. It should be understood, however, that the above parameters are only exemplary of one embodiment of a gas turbine engine including a geared architecture 48 and that the present disclosure is applicable to other gas turbine engines.

A significant amount of thrust is provided by the air in the bypass flow path B due to the high bypass ratio. The fan section 22 of the gas turbine engine 20 is designed for a particular flight condition -- typically cruise at about 0.8 Mach and about 35,000 feet (10,668 m). The flight condition of 0.8 Mach and 35,000 ft. (10,668 m), with the engine at its best fuel consumption - also known as "bucket cruise Thrust Specific Fuel Consumption ('TSFC')" - is the industry standard parameter of pound-mass (lbm) of fuel per hour being burned divided by pound-force (lbf) of thrust the engine produces at that minimum point.

"Low fan pressure ratio" is the pressure ratio across the fan blade alone, without a Fan Exit Guide Vane ("FEGV") system. The low fan pressure ratio as disclosed herein according to one non-limiting embodiment is less than about 1.50. In another non-limiting embodiment the low fan pressure ratio is less than about 1.45.

The example gas turbine engine includes the fan 42 that comprises in one non-limiting embodiment less than about twenty-six fan blades 62. In another non-limiting embodiment, the fan section 22 includes less than about twenty fan blades 62. Moreover, in one disclosed embodiment the low pressure turbine 46 includes no more than about six turbine rotors schematically indicated at 34. In another non-limiting example embodiment the low pressure turbine 46 includes about three turbine rotors. A ratio between the number of fan blades 62 and the number of low pressure turbine rotors is between about 3.3 and about 8.6. The example low pressure turbine 46 provides the driving power to rotate the fan section 22 and therefore the relationship between the number of turbine rotors 34 in the low pressure turbine 46 and the number of fan blades 62 in the fan section 22 disclose an example gas turbine engine 20 with increased power transfer efficiency.

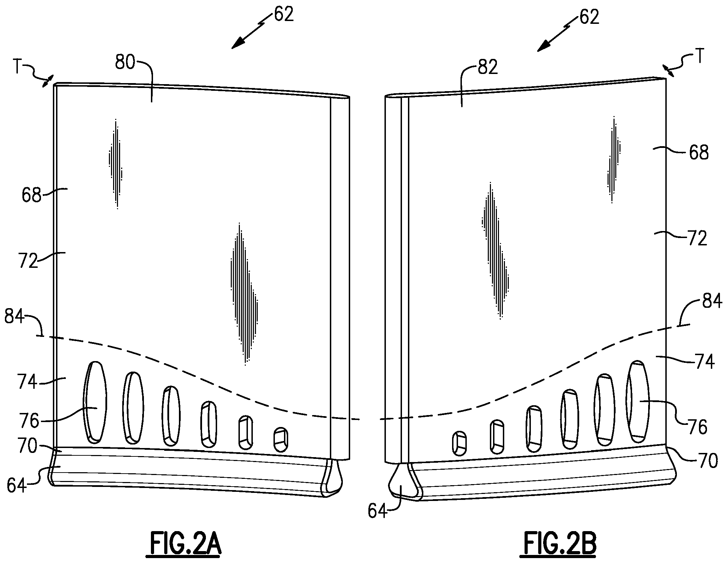

Figures 2A and 2B illustrate a fan blade 62 of the fan 42. The fan blade 62 includes a root 64 that is received in one of a plurality of slots (not shown) of a rotor 66 (Figure 1). The root 64 in this exemplary embodiment is a dovetail root, however, other roots that are known in the art may be implemented, like a fir-tree root. The root 64 is connected to a blade portion 68 by a neck 70. A first portion 72 of the fan blade 62 is exposed to a flow path of air, and a second portion 74 of the fan blade 62 is located below and radially inwardly of the first portion 72 and is not exposed to the flow path of air. The first portion 72 and the second portion 74 are separated by a boundary 84.

The second portion 74 of the blade portion 68 of the fan blade 62 includes external cavities 76. In one example, the external cavities 76 extend through an entire thickness T of the second portion 74 of the blade portion 68 of the fan blade 62. That is, the external cavities 76 extend from a pressure side 80 to a suction side 82 of the blade portion 68 of the fan blade 62. The external cavities 76 are not exposed to the flow path.

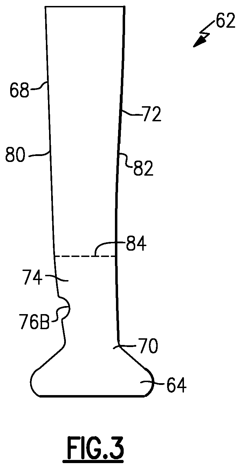

As shown in Figure 3, in another example, the external cavities 76b do not extend through the entire thickness T of the blade portion 68 of the fan blade 62. The external cavities 76b can located on either or both of an external surface 78 of the pressure side 80 and/or the suction side 82 of the blade portion 68 of the fan blade 62. In one example, each of the external cavities 76b is a recess or a pocket.

The external cavities 76 are located in the second portion 74 of the blade portion 68 of the fan blade 62 below the boundary 84 such that the external cavities 76 are not located within the flow path. In one example, the external cavities 76 are substantially elongated and extend in a radial direction. When the external cavities 76 are oriented in the radial direction, the external cavities 76 are also in a direction of a blade pull load and provide for better stress concentration because both the radius of curvature and the load are radial. The external cavities 76 have an elliptical shape to further reduce stress concentrations. The external cavities 76 have a length such that the external cavities 76 do not extend above the boundary 84 and into the second portion 74 that is exposed to the flow path. In one example, each of the external cavities 76 is a slot.

The external cavities 76 can be formed by several methods. In one example, the external cavities 76 are machined after the fan blade 62 is created. In another example, the fan blade 62 around the external cavities 76 is formed by an additive manufacture process where the external cavities 76 are formed from a three dimensional model. In another example, the external cavities 76 are formed by near net forging.

The external cavities 76 reduce the weight of the fan blade 62 while still allowing the fan blade 62 to meet structural requirements to allow the fan blade 62 to withstand an event, such as a bird strike or in the event of pull if the low spool 30 runs at a higher than expected speed. However, as the external cavities 76 are located in the second portion 74 of the fan blade 62 and are not located in the flow path, the external cavities 76 do not affect performance or aerodynamic efficiency of the fan 42. As the external cavities 76 do not need to be covered because they are not located in the flow path, the weight can be reduced as a cover is not needed to encase the external cavities 76. As the external cavities 76 reduce the weight of the fan blade 62, the chances of a fan blade out event are also reduced.

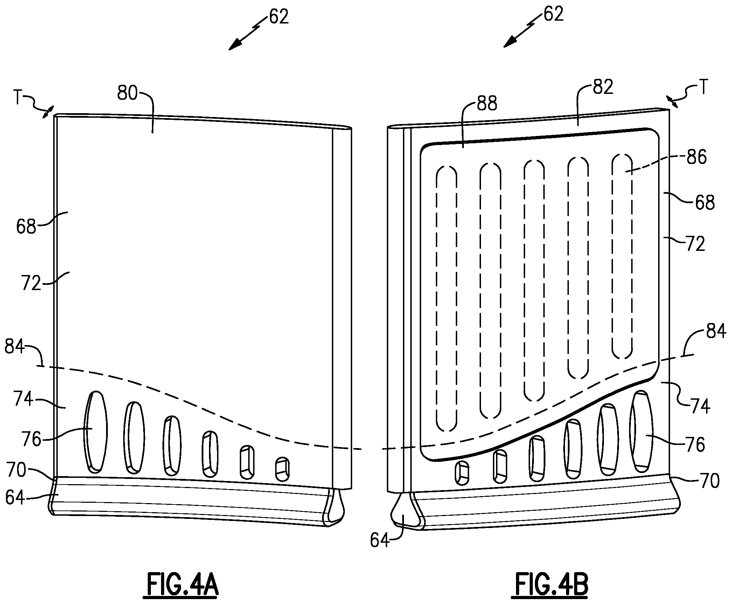

In another example shown in Figures 4A and 4B, the fan blade 62 further includes internal cavities 86 (shown in phantom) in the first portion 74 of the blade portion 68 of the fan blade 62 that is exposed to the flow path to further reduce the weight of the fan blade 62. A cover 88 is secured over the internal cavities 86 to prevent air from flowing through the internal cavities 86. The cover 88 does not cover the external cavities 76 in the second portion 74 of the blade portion 68.

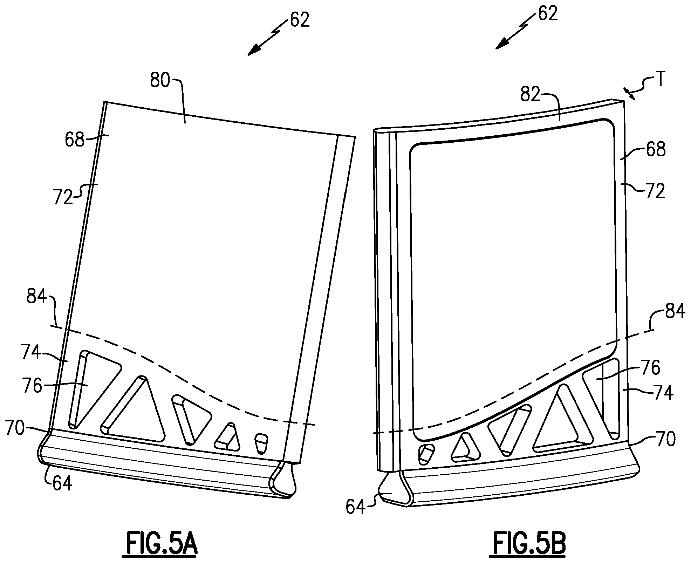

In another fan blade shown in Figures 5A and 5B, which falls outside the scope of the present invention, the external cavities 76 form a truss pattern, such as a warren girder truss, such that the external cavities 76 are substantially triangular in shape. The external cavities 76 can provide a further reduction in weight. However, the external cavities 76 can have any shape. The fan blade 62 of Figures 5A and 5B can also include the internal cavities 86 that are covered by a cover 88 as described and shown in the example of Figures 4A and 4B or include no internal cavities 86 as described and shown in the example of Figures 2A and 2B.

Although a fan blade 62 has been illustrated and described, the external cavities 76 can be added to a blade that is part of the low pressure compressor 44, the high pressure compressor 52, the high pressure turbine 54, or the low pressure turbine 46.

Although a gas turbine engine 20 with geared architecture 48 is described, the fan blade 62 can be employed in a gas turbine engine without geared architecture.

The foregoing description is only exemplary of the principles of the invention. Many modifications and variations are possible in light of the above teachings. It is, therefore, to be understood that within the scope of the appended claims, the invention may be practiced otherwise than using the example embodiments which have been specifically described. For that reason the following claims should be studied to determine the true scope and content of this invention.

## Claims

1. A blade (62) of a gas turbine engine (20) comprising:
an airfoil portion (68) including a first portion (72) located radially outwardly that is located in a flow path and a second portion (74) located radially inwardly of the first portion (72) that is not located in the flow path;
a root portion (64) radially inward of the airfoil portion (68); and
a plurality of external cavities (76) in the second portion (74) of the airfoil portion (68);
**characterised in that**:
each of the plurality of external cavities (76) is substantially elliptical in shape.

2. The blade (62) as recited in claim 1, wherein the blade (62) has a pressure side (80) and a suction side (82) spaced apart by a thickness (T), and each of the plurality of external cavities (76) extend from the pressure side (80) to the suction side (82).

3. The blade (62) as recited in claim 1, wherein the blade (62) has a pressure side (80) and a suction side (82) spaced apart by a thickness (T), and each of the plurality of external cavities (76) extend partially through the thickness (T) of the blade (62).

4. The blade (62) as recited in any preceding claim, wherein each of the plurality of external cavities (76) extend in a radial direction.

5. The blade (62) as recited in any preceding claim, including a plurality of internal cavities (86) in the first portion (72) of the of the airfoil portion (68), and a cover (88) is secured over the plurality of internal cavities (86).

6. The blade (62) as recited in any preceding claim, wherein the blade (62) is a fan blade of a fan (42).

7. The blade (62) as recited in any preceding claim, wherein the external cavities (76) are located on either or both of an external surface (78) of a pressure side (80) and/or suction side (82) of the airfoil portion (68).

8. A fan (42) of a gas turbine engine (20) comprising:
a rotor (66) including a plurality of slots; and
a plurality of blades (62) as set forth in any of claims 1 to 6, wherein the plurality of blades (62) are fan blades extending radially about an axial centerline and each of the root portions (64) are received in one of the plurality of slots of the rotor (66).

9. The fan (42) as recited in claim 8, wherein the root portion (64) is a dovetail.

## Patentansprüche

1. Schaufel (62) eines Gasturbinentriebwerks (20), umfassend:
einen Schaufelprofilabschnitt (68), umfassend einen ersten Abschnitt (72), der radial auswärts angeordnet ist und der in einem Strömungsweg angeordnet ist, und einen zweiten Abschnitt (74), der radial einwärts des ersten Abschnitts (72) angeordnet ist und der nicht in dem Strömungsweg angeordnet ist;
einen Fußabschnitt (64), der sich radial einwärts des Schaufelprofilabschnitts (68) befindet; und
eine Vielzahl von externen Hohlräumen (76) in dem zweiten Abschnitt (74) des Schaufelprofilabschnitts (68);
**dadurch gekennzeichnet, dass**:
jeder aus der Vielzahl von externen Hohlräumen (76) der Form nach im Wesentlichen elliptisch ist.

2. Schaufel (62) nach Anspruch 1, wobei die Schaufel (62) eine Druckseite (80) und eine Saugseite (82) aufweist, die voneinander um eine Dicke (T) beabstandet sind, und wobei jeder aus der Vielzahl von externen Hohlräumen (76) von der Druckseite (80) zur Saugseite (82) verläuft.

3. Schaufel (62) nach Anspruch 1, wobei die Schaufel (62) eine Druckseite (80) und eine Saugseite (82) aufweist, die voneinander um eine Dicke (T) beabstandet sind, und wobei jeder aus der Vielzahl von externen Hohlräumen (76) teilweise durch die Dicke (T) der Schaufel (62) verläuft.

4. Schaufel (62) nach einem der vorstehenden Ansprüche, wobei jeder aus der Vielzahl von externen Hohlräumen (76) in einer radialen Richtung verläuft.

5. Schaufel (62) nach einem der vorstehenden Ansprüche, die eine Vielzahl von internen Hohlräumen (86) in dem ersten Abschnitt (72) des Schaufelprofilabschnitts (68) beinhaltet und wobei eine Abdeckung (88) über der Vielzahl von internen Hohlräumen (86) fixiert ist.

6. Schaufel (62) nach einem der vorstehenden Ansprüche, wobei die Schaufel (62) eine Gebläseschaufel eines Gebläses (42) ist.

7. Schaufel (62) nach einem der vorstehenden Ansprüche, wobei die externen Hohlräume (76) an einer oder an beiden aus einer Außenfläche (78) einer Druckseite (80) und/oder Saugseite (82) des Schaufelprofilabschnitts (68) angeordnet sind.

8. Gebläse (42) eines Gasturbinentriebwerks (20), umfassend:
einen Rotor (66), der eine Vielzahl von Schlitzen beinhaltet; und
eine Vielzahl von Schaufeln (62) nach einem der Ansprüche 1 bis 6, wobei die Vielzahl von Schaufeln (62) Gebläseschaufeln sind, die sich radial um eine axiale Mittellinie erstrecken, und wobei jeder der Fußabschnitte (64) in einem aus der Vielzahl von Schlitzen des Rotors (66) aufgenommen sind.

9. Gebläse (42) nach Anspruch 8, wobei der Fußabschnitt (64) ein Schwalbenschwanz ist.

## Revendications

1. Aube (62) d'un moteur à turbine à gaz (20) comprenant :
une partie de surface portante (68) comprenant une première partie (72) située radialement vers l'extérieur qui est située dans un trajet d'écoulement et une seconde partie (74) située radialement vers l'intérieur de la première partie (72) qui n'est pas située dans le trajet d'écoulement ;
une partie de pied (64) radialement à l'intérieur de la partie de surface portante (68) ; et
une pluralité de cavités extérieures (76) dans la seconde partie (74) de la partie de surface portante (68) ;
**caractérisée en ce que** :
chacune de la pluralité de cavités extérieures (76) a une forme sensiblement elliptique.

2. Aube (62) selon la revendication 1, dans laquelle l'aube (62) présente un côté pression (80) et un côté aspiration (82) espacés d'une épaisseur (T), et chacune de la pluralité de cavités extérieures (76) s'étend depuis le côté pression (80) jusqu'au côté aspiration (82).

3. Aube (62) selon la revendication 1, dans laquelle l'aube (62) présente un côté pression (80) et un côté aspiration (82) espacés d'une épaisseur (T), et chacune de la pluralité de cavités extérieures (76) s'étend partiellement à travers l'épaisseur (T) de l'aube (62).

4. Aube (62) selon une quelconque revendication précédente, dans laquelle chacune de la pluralité de cavités extérieures (76) s'étend dans une direction radiale.

5. Aube (62) selon une quelconque revendication précédente, comprenant une pluralité de cavités intérieures (86) dans la première partie (72) de la partie de surface portante (68),
et un couvercle (88) est fixé sur la pluralité de cavités intérieures (86).

6. Aube (62) selon une quelconque revendication précédente, dans laquelle l'aube (62) est une aube de soufflante d'une soufflante (42).

7. Aube (62) selon une quelconque revendication précédente, dans laquelle les cavités extérieures (76) sont situées sur l'une des surfaces extérieures (78) d'un côté pression (80) et/ou d'un côté aspiration (82) de la surface portante (68) ou sur les deux.

8. Soufflante (42) d'un moteur à turbine à gaz (20) comprenant :
un rotor (66) comprenant une pluralité de fentes ; et
une pluralité d'aubes (62) selon l'une quelconque des revendications 1 à 6, dans laquelle la pluralité d'aubes (62) sont constituées d'aubes de soufflante s'étendant radialement autour d'une ligne médiane axiale et chacune des parties de pied (64) est reçue dans l'une de la pluralité de fentes du rotor (66).

9. Soufflante (42) selon la revendication 8, dans laquelle la partie de pied (64) est une queue d'aronde.
